(19) Europäisches Patentamt
European Patent Office
Office européen des brevets

(11)  **EP 2 991 323 B1**

(12)  **EUROPEAN PATENT SPECIFICATION**

(45)  Date of publication and mention
of the grant of the patent:
**29.04.2020   Bulletin 2020/18**

(51)  Int Cl.:
**H04M 1/02** *(2006.01)*      **H04N 9/31** *(2006.01)*

(21)  Application number: **15182834.0**

(22)  Date of filing: **27.08.2015**

(54)  **MOBILE DEVICE AND METHOD OF PROJECTING IMAGE BY USING THE MOBILE DEVICE**

MOBILE VORRICHTUNG UND VERFAHREN ZUR PROJEKTION EINES BILDES MIT DER MOBILEN VORRICHTUNG

DISPOSITIF MOBILE ET PROCÉDÉ DE PROJECTION D'IMAGE À L'AIDE DU DISPOSITIF MOBILE

(84)  Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30)  Priority:  **01.09.2014   KR 20140115474**

(43)  Date of publication of application:
**02.03.2016   Bulletin 2016/09**

(73)  Proprietor: **Samsung Electronics Co., Ltd.
Gyeonggi-do 16677 (KR)**

(72)  Inventors:
• **BOZYK, Maciej
01-494 Warsaw (PL)**
• **JAKUBIAK, Antoni
05-600 Grojec (PL)**

(74)  Representative: **HGF Limited
Saviour House
9 St. Saviourgate
York YO1 8NQ (GB)**

(56)  References cited:
**EP-A1- 2 180 676       KR-A- 20130 088 104
US-A1- 2012 017 147     US-A1- 2012 165 077**

**Description**

CROSS-REFERENCE TO RELATED APPLICATION(S)

This application claims the benefit of a Korean patent application filed on September 1, 2014 in the Korean Intellectual Property Office and assigned Serial number 10-2014-0115474.

**TECHNICAL FIELD**

The present disclosure relates to a mobile device and a method of projecting an image by using the mobile device. More particularly, the present disclosure relates to a mobile device capable of projecting an image of an area desired to be viewed by a user from among the entire image expressing content being replayed or accessed on the mobile device, and capable of intuitively changing and manipulating a projected image.

**BACKGROUND**

As the functionality of mobile devices has become more diversified, terminals having complex functions, such as taking a picture, recording a video, playing music or a video file, playing games, receiving broadcast programs, and the like, have been implemented. An image projection function, which until recently was possible using a large-size projector, may now also be performed using a mobile device.

When projecting an image by using a mobile device, a user may project an image onto a desired point without being restricted by space. However, an interface used to control the projected image is limited when providing the image projection function by using the mobile device.

US 20120165077 describes the operation of a mobile device incorporating an attitude detector, a projector and a display unit. The display unit displays an image that corresponds to an image projected by the projector (such as a portion of a world map). By changing the attitude of the mobile device, a corresponding change is made to the image projected by the projector and this in turn causes a change in the displayed image on the display unit.

EP 2180676 also describes a mobile device with a projection facility. Motion of the mobile terminal is translated into a change in the projected image.

Therefore, a need exists for a mobile device capable of projecting an image of an area desired to be viewed by a user from among the entire image expressing content being replayed or accessed on the mobile device, and capable of intuitively changing and manipulating a projected image, and a method of projecting an image by using the mobile device.

The above information is presented as background information only to assist with an understanding of the present disclosure. No determination has been made, and no assertion is made, as to whether any of the above might be applicable as prior art with regard to the present disclosure.

**SUMMARY**

Aspects of the present disclosure are to address at least the above-mentioned problems and/or disadvantages and to provide at least the advantages described below. Accordingly, the present invention is defined by the subject-matter according to the independent claims. Further aspects of the invention are defined according to the dependent claims.

References to embodiments which do not fall under the scope of the claims are to be understood as examples useful for understanding the invention.

Other aspects, advantages, and salient features of the disclosure will become apparent to those skilled in the art from the following detailed description, which, taken in conjunction with the annexed drawings, discloses various embodiments of the present disclosure.

**BRIEF DESCRIPTION OF THE DRAWINGS**

The above and other aspects, features, and advantages of certain embodiments of the present disclosure will be more apparent from the following description taken in conjunction with the accompanying drawings, in which:

FIGS. 1A and 1B are conceptual diagrams schematically illustrating a method of projecting an image by using a mobile device according to an embodiment of the present disclosure;
FIG. 2 is a flowchart of a method of changing an image projected, by using a mobile device, onto an object according to an embodiment of the present disclosure;

FIG. 3 illustrates a projection image projected onto an object by using a mobile device and a pointer disposed on the projection image according to an embodiment of the present disclosure;

FIG. 4 is a block diagram illustrating a mobile device projecting a projection image and a pointer disposed on the projection image according to an embodiment of the present disclosure;

FIG. 5 is a flowchart of a method of changing a position of a pointer on a projection image based on a user input, by using a mobile device according to an embodiment of the present disclosure;

FIG. 6 is a view illustrating a change in a position of a pointer on a projection image based on a user input according to an embodiment of the present disclosure;

FIG. 7 is a block diagram illustrating a mobile device changing a position of a pointer on a projection image based on a user input according to an embodiment of the present disclosure;

FIG. 8 is a flowchart of a method of changing a position of a pointer on a projection image by moving a mobile device according to an embodiment of the present disclosure;

FIGS. 9A and 9B are diagrams illustrating a method of changing a position of a pointer by moving a mobile device according to an embodiment of the present disclosure;

FIGS. 10A, 10B, and 10C illustrate a mobile device rotated with respect to an x-axis, a y-axis, and a z-axis, respectively according to an embodiment of the present disclosure;

FIGS. 11A and 11B are diagrams illustrating a change in a position of a pointer as a projection image is changed when a mobile device is moved according to an embodiment of the present disclosure; and

FIGS. 12A, 12B, 13A, and 13B are diagrams illustrating a method of correcting distortion of a projection image by using a mobile device according to an embodiment of the present disclosure.

Throughout the drawings, like reference numerals will be understood to refer to like parts, components, and structures.

## DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

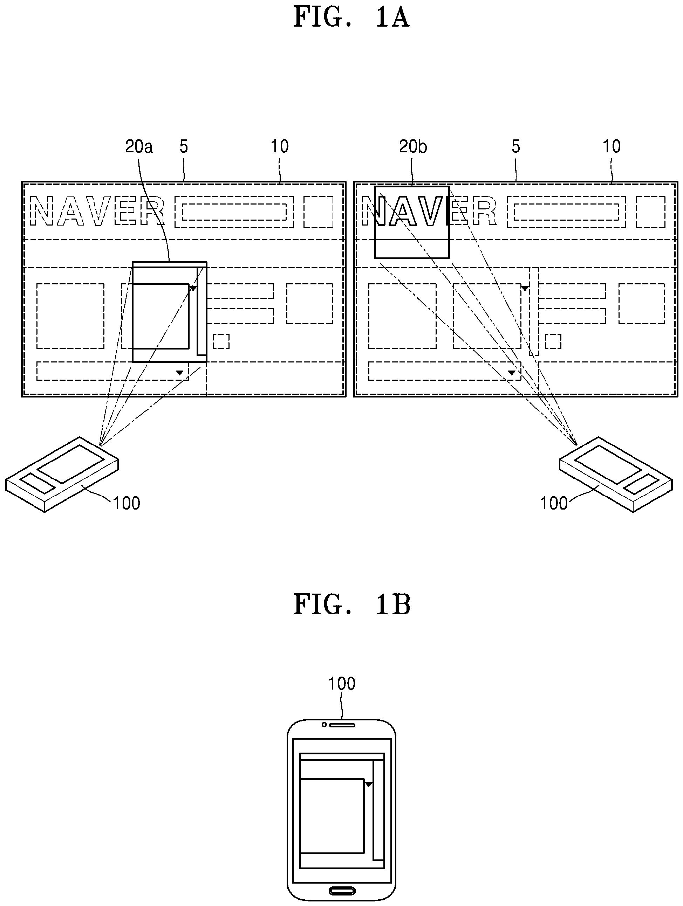

FIGS. 1A and 1B are conceptual diagrams schematically illustrating a method of projecting an image by using a mobile device according to an embodiment of the present disclosure.

Referring to FIGS. 1A and 1B, a mobile device 100 according to an embodiment of the present disclosure may project a portion of an image or the entire image that is renderable by using the mobile device 100, onto an object 5. For example, the mobile device 100 may project an image area 20a displayed on the mobile device 100, from among an entire image 10 expressing content being replayed or accessed on the mobile device 100. Images that are renderable by using the mobile device 100 include an image showing a function performed on the mobile device 100, an execution screen of an application, and the like, a replay screen of image content, a broadcasting screen, and the like.

Referring to FIG. 1A, a partial area of an image of a webpage accessed on the mobile device 100 may be projected onto an object 5. For example, when the mobile device 100 displays a portion of a webpage as illustrated in FIG. 1B, the mobile device 100 may project the portion of the webpage displayed on a screen of the mobile device 100, from among the entire area of the webpage that is being accessed, onto the object 5. The object 5 refers to a surface on which a projected image may be expressed, and includes, for example, a wall, a roll screen, a whiteboard, and the like. The object 5 may have various forms, such as a planar surface or a curved surface.

Meanwhile, according to an embodiment of the present disclosure, when the mobile device 100 moves, an image displayed on the mobile device 100 may be changed according to a movement direction of the mobile device 100. The mobile device 100 according to the present embodiment may change an image area being displayed thereon, from among the entire image 10, according to a movement direction of the mobile device 100. For example, as illustrated in FIG. 1A, an image area to be displayed may be changed from a first projection image 20a to a second projection image 20b according to movement of the mobile device 100. Examples of movement of the mobile device 100 may include a change in a position value of the mobile device 100 or a change in an inclination value of the mobile device 100 with respect to a preset rotational axis.

For example, as illustrated in FIG. 1A, the mobile device 100 may generate the first projection image 20a by projecting a first area displayed on a screen thereof from among a webpage that is presently being accessed, onto the object 5. If a projection direction of the mobile device 100 is changed to point toward a left upper side, the first projection image 20a displayed on the screen may be changed as illustrated in FIG. 1A. In order that movement of the mobile device 100 and a projection image correspond to each other, the mobile device 100 may project an image area existing on a left upper end of the first area displayed on the screen to thereby generate the second projection image 20b.

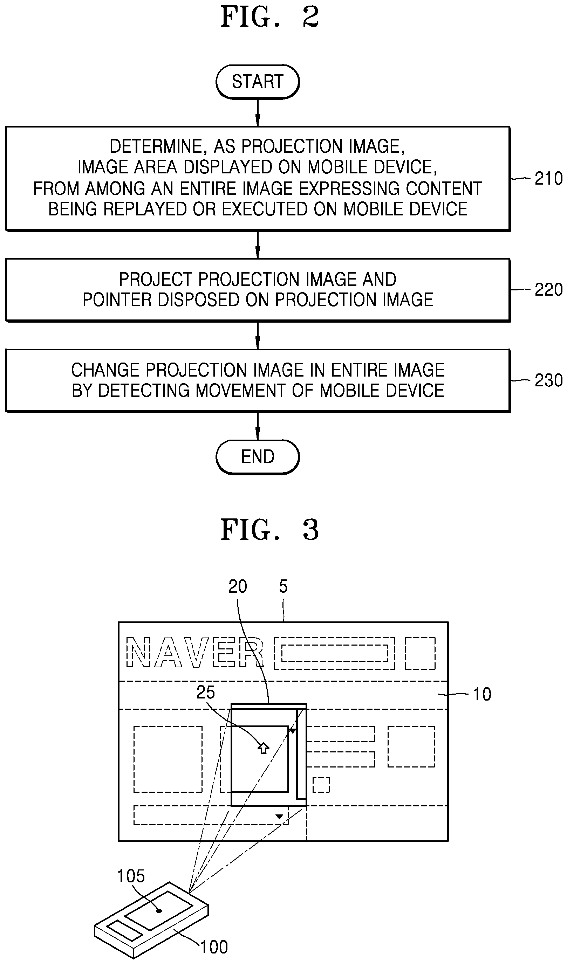

FIG. 2 is a flowchart of a method of changing an image projected, by using a mobile device, onto an object according to an embodiment of the present disclosure.

Referring to FIG. 2, in operation 210, the mobile device 100 may determine, as a first projection image 20a, an image area displayed on the mobile device 100, from among the entire image 10 expressing content being replayed or accessed on the mobile device 100.

When a web browser is being accessed on the mobile device 100, a webpage selected by a user may be displayed on the screen of the mobile device 100. The mobile device 100 may determine the webpage displayed on the screen thereof as a first projection image 20a.

Meanwhile, a user may determine not only a type of an image displayed on the screen of the mobile device 100 but also a size of the image. For example, the user may expand or reduce a webpage displayed on the screen of the mobile device 100. When the webpage displayed on the screen of the mobile device 100 is expanded, only a portion of the expanded webpage is displayed on the screen of the mobile device 100. In this case, the mobile device 100 may determine the portion of the webpage displayed on the screen thereof as a projection image.

In operation 220, the mobile device 100 may project the first projection image 20a and a pointer disposed on the first projection image 20a on the object 5. For example, the mobile device 100 may project the first projection image 20a determined in operation 210, on a surface of a wall. If the image displayed on the screen of the mobile device 100 is a portion of the expanded webpage, the portion of the expanded webpage may be projected on a corresponding portion of the wall.

In addition, the mobile device 100 may project the pointer together with the first projection image 20a.

According to an embodiment of the present disclosure, the pointer performs the function of indicating a certain point on the first projection image 20a. For example, the pointer may be used to attract the attention of a user who is viewing the first projection image 20a.

According to an embodiment of the present disclosure, the pointer may function as a cursor used to select a point to which a command is to be input. For example, by using the pointer, the user may enter a mode in which a command may be input to a login window or a search window of a website, or input a signal for selecting a certain object of a website.

The pointer may be scanned on the object 5 together with the first projection image 20a. The pointer may have various shapes, such as an arrow, a circle, a rectangle, a triangle, and the like. According to an embodiment of the present disclosure, according to a user's selection, or according to control of the mobile device 100, a shape of the pointer may be changed. For example, the mobile device 100 may change a shape of the pointer based on a state or mode of the mobile device 100.

According to an embodiment of the present disclosure, a position of a pointer disposed on a first projection image may be determined based on a preset reference point. For example, if a user sets a center of a projection image as a reference point, the mobile device 100 may dispose a pointer at a center of a projection image, and may project the projection image on which a pointer is disposed, onto the object 5. According to the present embodiment of the present disclosure, if a pointer is preset to be disposed at a center of a projection image, an image projected onto the object 5 according to movement of the mobile device 100 is changed from the first projection image 20a to the second projection image 20b, and the pointer may also be moved from a center of the first projection image 20a to a center of the second projection image 20b. Accordingly, by moving the mobile device 100, the user may change a projection image, and also, at the same time, may intuitively change a position where the pointer is disposed among the entire image 10.

A projection image projected by the mobile device 100 onto the object 5 and a pointer disposed on the projection image will be described below with reference to FIG. 3.

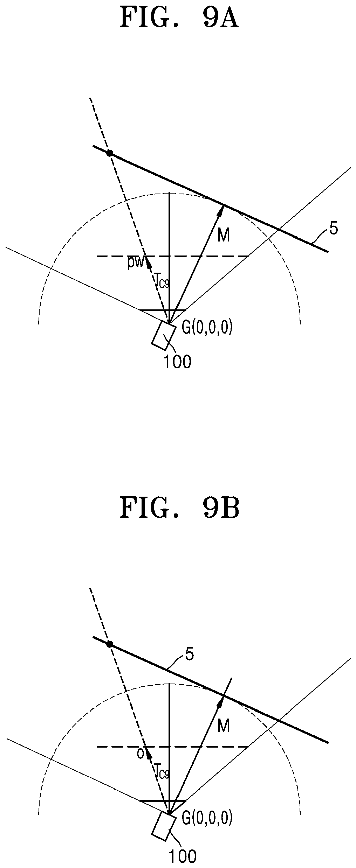

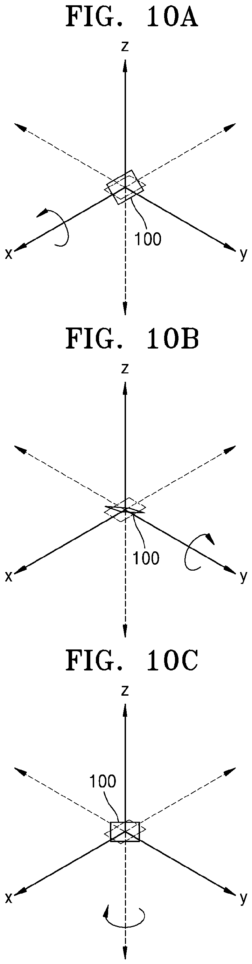

In operation 230, the mobile device 100 detects movement of itself to change a projection image among the entire image. When the mobile device 100 moves, a position and an inclination of the mobile device 100 may be changed. According to an embodiment of the present disclosure, a position value of the mobile device 100 may be determined based on coordinate values thereof that are changed according to horizontal and vertical movements thereof. In addition, according to an embodiment of the present disclosure, an inclination of the mobile device 100 may be determined based on a rotational angle value thereof indicating a degree of rotation thereof with respect to each axis based on a three-dimensional axis space. This will be described below with reference to FIGS. 9 and 10.

The mobile device 100 may detect movement of itself and may change a projection image based on a position value and an inclination value thereof that are changed according to the movement. For example, when the mobile device 100 has moved after a first image area from among the entire area of a webpage on a screen of the mobile device 100 is projected onto the object 5 as a projection image, the mobile device 100 may change the first projection image 20a based on the position value and the inclination value thereof that are changed according to the movement thereof. When the mobile device 100 has moved, the mobile device 100 may detect the changed position value and the changed inclination value thereof and determine the second projection image 20b corresponding to the changed position value and the changed inclination value. For example, when the mobile device 100 detects itself moving toward the left with respect to a current projection direction, the mobile device 100 may determine an image located on the left side of the first projection image 20a as the second projection image 20b.

If the mobile device 100 projects a partial image from among the entire image displayed on the screen, onto the object 5, the user may change the projection image by moving the mobile device 100.

FIG. 3 illustrates a projection image projected on an object by using a mobile device and a pointer disposed on the projection image according to an embodiment of the present disclosure.

Referring to FIG. 3, the mobile device 100 may determine a partial image displayed on a screen thereof from among the entire image of a webpage, as the projection image 20. The mobile device 100 may project a projection image 20 onto the object 5.

In addition, the mobile device 100 may dispose a pointer 25 based on a preset reference point 105 of the projection image 20 together with the projection image 20. For example, the mobile device 100 may determine a center of the screen thereof as the reference point 105. The mobile device 100 may dispose the pointer 25 at a position on the projection image 20 corresponding to the reference point 105.

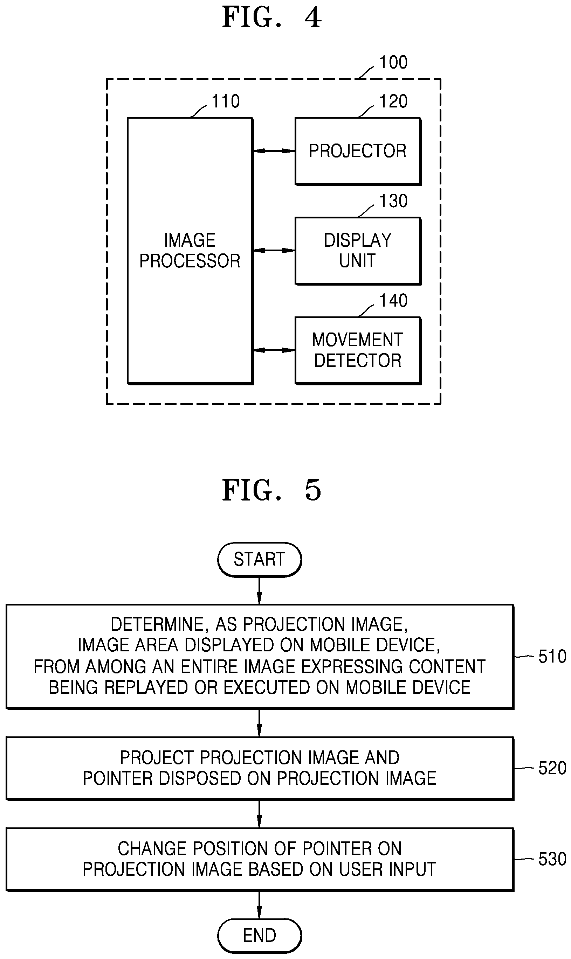

According to an embodiment of the present disclosure, the user may change a position of the pointer 25 in the current projection image 20. A method of changing the position of the pointer 25 will be described below with reference to FIGS. 5 to 11.

FIG. 4 is a block diagram illustrating a mobile device projecting a projection image and a pointer disposed on the projection image according to an embodiment of the present disclosure.

Referring to FIG. 4, only elements of the mobile device 100 related to the present embodiment are illustrated. Thus, it will be obvious to one of ordinary skill in the art related to the present embodiment that general-use elements other than the elements illustrated in FIG. 4 may be further included.

Referring to FIG. 4, the mobile device 100 may include an image processor 110, a projector 120, a display unit 130, and a movement detector 140.

The display unit 130 displays content being replayed or accessed on the mobile device 100. The display unit 130 displays an image of the content based on image data output from the image processor 110 on a screen of the mobile device 100.

The image processor 110 may determine, as a projection image, an image area displayed on the mobile device 100, from among the entire image expressing the content being replayed or accessed on the mobile device 100. The image processor 110 may determine a partial area to be displayed on the display unit 130 among the entire image to generate image data to be output to the display unit 130, and output the image data to the display unit 130. In addition, the partial area to be displayed on the display unit 130 is determined as the projection image.

In addition, the image processor 110 may detect movement of the mobile device 100 to change the projection image from among the entire image.

The movement detector 140 may detect movement of the mobile device 100 to obtain a position value and an inclination value of the mobile device 100. The movement detector 140 outputs the position value and the inclination value of the mobile device 100 to the image processor 110. For example, the movement detector 140 may output a change in the position value and the inclination value of the mobile device 100 after movement of the mobile device 100 is detected.

The movement detector 140 may include at least one of a geomagnetic sensor, an acceleration sensor, and a gyroscope, but is not limited thereto. Functions of respective sensors may be intuitively deduced from the names thereof by one of ordinary skill in the art, and thus description thereof will be omitted.

In addition, the image processor 110 may perform control needed to project a projection image onto the object 5, and when movement of the mobile device 100 is detected, the image processor 110 performs control needed to update image data based on a changed position value or a changed inclination value of the mobile device 100. For example, the image processor 110 changes an image projected onto the object 5 based on the changed position value and the changed inclination value of the mobile device 100 and the projection image 20a which is not changed.

Meanwhile, when the mobile device 100 moves, a position of a pointer disposed according to the changed projection image 20b may also be changed according to the change of the position value and the inclination value of the mobile device 100 detected by the image processor 110.

The projector 120 may project the projection image and the pointer disposed on the projection image onto the object 5. According to an embodiment of the present disclosure, a position of the pointer disposed on the projection image may be determined based on a preset reference point. For example, when the user sets a center of the projection image as a reference point, the projector 120 may dispose the pointer at the center of the projection image and project the projection image on which the pointer is disposed, onto the object 5.

When the projection image is changed according to movement of the mobile device 100, the projector 120 may receive the changed projection image from the image processor 110 to project the same onto the object 5.

FIG. 5 is a flowchart of a method of changing a position of a pointer on a projection image based on a user input, by using a mobile device according to an embodiment of the present disclosure.

Referring to FIG. 5, in operation 510, the mobile device 100 may determine, as a projection image 20, an image area displayed on the mobile device 100, from among the entire image 100 expressing content being replayed or accessed on the mobile device 100. The image area displayed on the mobile device 100 may be an image area displayed on a screen of the mobile device 100. The image area displayed on the screen of the mobile device 100 may indicate a portion of the entire image or the actual entire image. In addition, the displayed image may be an image obtained by expanding a partial area of the entire image.

Meanwhile, operation 510 may correspond to operation 210 of FIG. 2.

In operation 520, the mobile device 100 may project a projection image and a pointer disposed on the projection image onto the object 5. In addition, the mobile device 100 may project the pointer together with the projection image. A position of the pointer disposed on the projection image may be determined based on a preset reference point.

Meanwhile, operation 520 may correspond to operation 220 of FIG. 2.

In operation 530, the mobile device 100 may change a position of the pointer on the projection image based on an obtained user input. The mobile device 100 may receive a user input for moving the pointer to a certain point included in the projection image. The user input may include information about the changed position of the pointer. For example, the user input may include information about a movement position value indicating how much the pointer is to be moved in an x-axis or y-axis direction with respect to a present position of the pointer on the projection image.

The mobile device 100 may display the pointer at the changed position of the pointer on the projection image indicated by the obtained user input. For example, if the user drags the pointer in a direction in which the pointer is intended to be moved, while touching the screen of the mobile device 100, the mobile device 100 may display the pointer as moving according to the direction in which the user drags the pointer. A method of displaying the pointer is not limited thereto.

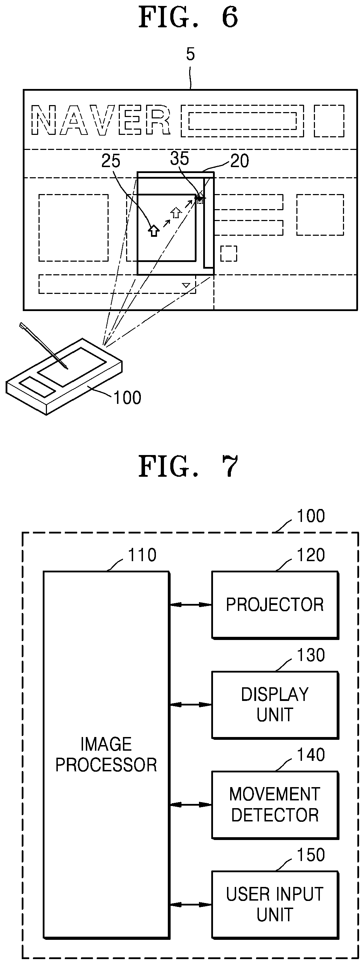

Hereinafter, a method of moving a position of a pointer to a certain point based on a user input to the mobile device 100 will be described below with reference to FIG. 6.

FIG. 6 is a view illustrating a change in a position of a pointer on a projection image based on a user input according to an embodiment of the present disclosure.

Referring to FIG. 6, the mobile device 100 may generate the projection image 20 by projecting an image area displayed on a screen thereof from among the entire image expressing content being replayed or accessed, onto the object 5. The pointer 25 may be displayed at a position on the projection image 20 corresponding to a preset reference point 35 on the screen of the mobile device 100.

Meanwhile, the mobile device 100 may obtain a user input that is input to the screen thereof. The user may touch the screen of the mobile device 100 by using an input instrument, such as a touch pen or a finger, to input information about a position of the pointer, to which the pointer is to be moved on the projection image 20, to the mobile device 100. However, the user may also input to the mobile device 100 information about a position, to which the pointer 25 is to be moved on the projection image, by moving an input instrument or finger within a preset distance to the mobile device 100.

Referring to FIG. 6, the mobile device 100 may move the pointer 25 located at a center of the projection image 20 to a right upper end of the projection image 20 based on a user input. For example, while touching a certain point 35 on the screen, the mobile device 100 may move the pointer 25 from a preset point 35 toward the right upper end when receiving a user input indicating to drag the pointer 25 to the right upper end.

The mobile device 100 according to an embodiment of the present disclosure may display the pointer 25 on the projection image 20 and may display a change in a position of the pointer 25 that is moved based on a user input. Thus, the user may select a desired service from among services provided through content being replayed or accessed on the mobile device 100.

FIG. 7 is a block diagram illustrating a mobile device changing a position of a pointer on a projection image based on a user input according to an embodiment of the present disclosure.

Referring to FIG. 7, only elements of the mobile device 100 related to the present embodiment are illustrated. Thus, it will be obvious to one of ordinary skill in the art related to the present embodiment that general-use elements other than the elements illustrated in FIG. 7 may be further included.

Referring to FIG. 7, the mobile device 100 may include an image processor 110, a projector 120, a display unit 130, a movement detector 140, and a user input unit 150.

The image processor 110 may determine, as a projection image 20, an image area displayed on the mobile device 100, from among the entire image expressing content being replayed or accessed on the mobile device 100.

The image processor 110 may determine a position of a pointer 25 disposed on a projection image 20 based on a preset reference point on a screen of the mobile device 100. The pointer 25 performs the function of indicating a certain point on the projection image 20. For example, the image processor 110 may determine, as a projection image, an image displayed on the screen of the mobile device 100, from among the entire image, and may determine a reference point at a center of the image displayed on the screen. The image processor 110 may dispose the pointer 25 at a center of the projection image 20 such that the pointer 25 corresponds to the determined reference point.

Meanwhile, the pointer 25 disposed on the projection image 20 may be moved within the projection image 20 based on a user input. The user input may include information about a changed position of the pointer 25. Movement of the pointer 25 based on a user input and the information about the changed position of the pointer 25 will be described below with reference to the user input unit 150 later.

The projector 120 may project the projection image 20 and the pointer 25 disposed on the projection image 20, onto the object 5.

When the projection image 20 is changed according to movement of the mobile device 100, the projector 120 may receive the changed projection image from the image processor 110 and project the same onto the object 5. The projector 120 may include a light source (not shown) emitting light to be used in projection, a light modulation unit (not shown) modulating light incident from the light source, according to an image signal, and a lens unit (not shown) projecting light incident from the light modulation unit onto a screen. The light modulation unit may include, for example, a cathode ray tube (CRT) or a light emitting diode (LED).

The user input unit 150 receives a user input. The user input unit 150 may be formed of a keypad or a touch screen formed of combination of various keys, through which various numbers, letters, or symbols and various user commands may be input. The user input unit 150 may transmit a user input requesting a change in a position of a pointer, according to an embodiment of the present disclosure, to the image processor 110.

Meanwhile, the user input unit 150 may obtain a command for initializing projection images 20a and 20b determined by the mobile device 100. When the mobile device 100 receives a command for initializing a projection image determined by using the mobile device 100, the user input unit 150 may transmit a user input to the image processor 110. The image processor 110 may redetermine a projection image at an initialized position based on the user input.

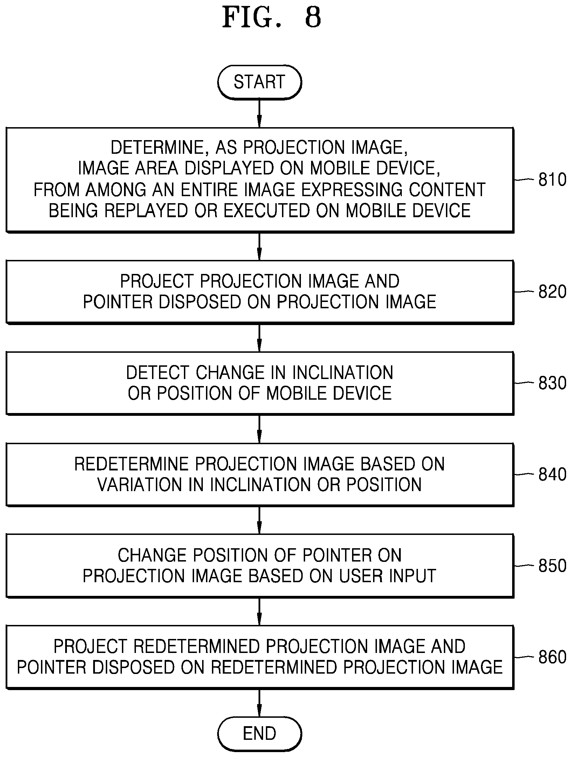

FIG. 8 is a flowchart of a method of changing a position of a pointer on a projection image by moving a mobile device according to an embodiment of the present disclosure.

Referring to FIG. 8, in operation 810, the mobile device 100 may determine, as a projection image 20, an image area displayed on the mobile device 100, from among the entire image 10 expressing content being replayed or accessed on the mobile device 100. The image area displayed on the mobile device 100 may be an image area displayed on a screen of the mobile device 100. The image area displayed on the screen of the mobile device 100 may be differently determined not only according to image types but also according to image sizes.

Meanwhile, operation 810 may correspond to operation 210 of FIG. 2.

In operation 820, the mobile device 100 may project a projection image and a pointer disposed on the projection image, onto the object 5. In addition, the mobile device 100 may project the pointer together with the projection image. A position of the pointer disposed on the projection image may be determined based on a preset reference point.

Meanwhile, operation 820 may correspond to operation 220 of FIG. 2.

In operation 830, the mobile device 100 may detect a change in an inclination or position thereof.

The mobile device 100 may detect a change in an inclination or a position thereof by using at least one of a geomagnetic sensor, an acceleration sensor, and a gyroscope included in the mobile device 100.

The user may change a projection image 20a projected onto the object 5 by moving the mobile device 100. If a change in an inclination or a position of the mobile device 100 exceeds a preset critical value, the mobile device 100 may determine that the user has moved the mobile device 100 in order to change the projection image 20a. According to an embodiment of the present disclosure, if the change of the inclination or the position of the mobile device 100 is maintained for a preset period of time or longer, the mobile device 100 may determine that the user has moved the mobile device 100 in order to change the projection image 20a.

In operation 840, the mobile device 100 may detect a variation in the inclination or the position thereof.

For example, if a change in the inclination or the position of the mobile device 100 exceeds a preset critical value and is maintained for a preset period of time or longer, the mobile device 100 may detect a variation in the inclination or the position thereof.

According to an embodiment of the present disclosure, if the detected variation in the inclination or the position of the mobile device 100 for a preset period of time exceeds a preset critical value, the mobile device 100 may initialize position information or inclination information thereof. When generating a changed projection image 20b, if an amount of movement of the mobile device 100 is large, distortion is highly likely to occur in the changed projection image 20b. Thus, in this case, a new projection image may be determined by initializing position information or inclination information of the mobile device 100 at a position to which the mobile device 100 is moved.

In operation 850, the mobile device 100 may redetermine a projection image based on the detected variation in the inclination or position thereof.

By using the variation in the mobile device's inclination or position, the mobile device 100 may redetermine a new projection image from among the entire image expressing content being accessed or replayed on the mobile device 100. For example, the mobile device 100 may redetermine a second projection image that is moved from a first projection image that is projected before the mobile device 100 has moved, by an amount of an area corresponding to the detected variation in the inclination or position within the entire image.

Meanwhile, the mobile device 100 may set the pointer 25 such that the pointer 25 is always at the same position within the projection image 20. For example, the mobile device 100 may set the pointer 25 such that the pointer 25 is always at a center point in the projection image 20. If there is a certain point to be selected using the pointer 25 from among the entire image expressing content being replayed or accessed on the mobile device 100, the user may move the mobile device 100 so that the pointer 25 corresponds to the certain point.

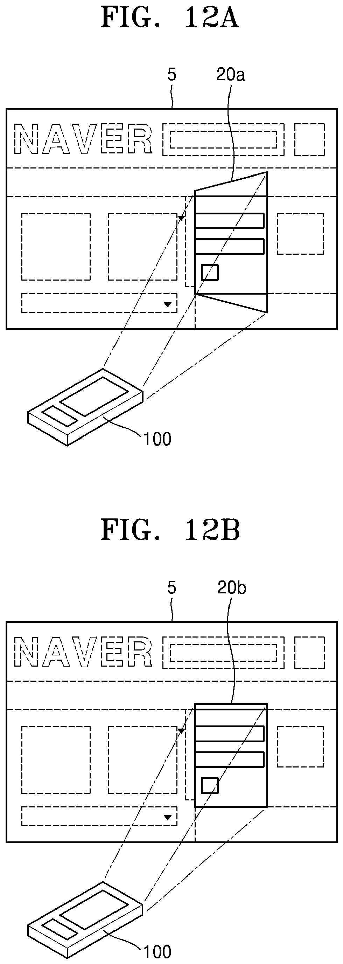

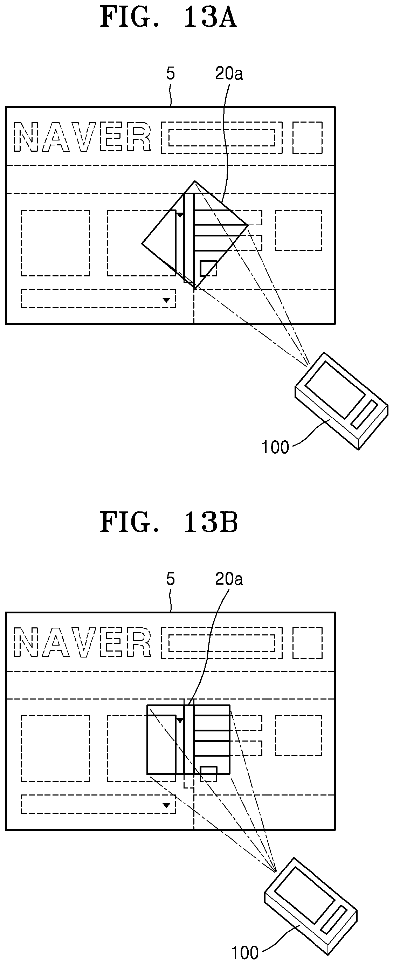

When the projection image 20 is redetermined according to movement of the mobile device 100, the mobile device 100 according to an embodiment of the present disclosure may correct distortion of the projection image 20. If an inclination value of the mobile device 100 is changed, an image projected onto the object 5 may be distorted due to spreading of the projection image 20, and the like. A method of correcting distortion by using the mobile device 100 will be described below with reference to FIGS. 12A, 12B, 13A, and 13B.

In operation 860, the mobile device 100 may project the redetermined projection image and a pointer disposed on the redetermined projection image.

Meanwhile, if the redetermined projection image is not projected onto the object 5 within a preset period of time, the mobile device 100 may initialize the redetermined projection image and determine a new projection image at a position to which the mobile device 100 is moved. The mobile device 100 may determine whether the redetermined projection image is projected onto the object 5 within a preset period of time based on an image of the object 5 captured by using a camera.

FIGS. 9A and 9B are diagrams illustrating a method of changing a position of a pointer by moving a mobile device according to an embodiment of the present disclosure.

Referring to FIGS. 9A and 9B, the mobile device 100 according to an embodiment of the present disclosure may dispose the pointer 25 at a preset certain point on a projection image 20 projected onto the object 5. Thus, the user may move the mobile device 100 to specify, by using the pointer 25, an image area desired by a user, from among the entire image expressing content being accessed or replayed.

Referring to FIG. 9A, a position value of the mobile device 100 projecting the projection image 20 vertically with respect to the object 5 may be changed in a horizontal direction or a vertical direction according to a user input, or an inclination value of the mobile device 100 may be changed with respect to one of an x-axis, a y-axis, and a z-axis. If the position value or the inclination value of the mobile device 100 is changed, a projection image that is selected from among the entire image may also be changed.

FIG. 9A illustrates a world coordinate system illustrating a changed position of the pointer 25 as a result of movement of the mobile device 100. In addition, FIG. 9B illustrates a model coordinate system illustrating a changed position of the pointer 25 as a result of movement of the mobile device 100. The mobile device 100 may perform a conversion process expressed in Equations 1 to 6 below in order to dispose the pointer 25 on the projection image 20 based on a changed position value or a changed inclination value of the mobile device 100.

In Equation 1 below, by using rotational angles whereby the mobile device 100 is rotated with respect to the-x axis, the y-axis, and the z-axis, inclination values Rr, Ry, and Rp of the mobile device 100 with respect to the x-axis, the y-axis, and the z-axis may be obtained.

$$R_r = \begin{bmatrix} \cos(roll) & -\sin(roll) & 0 & 0 \\ \sin(roll) & \cos(roll) & 0 & 0 \\ 0 & 0 & 1 & 0 \\ 0 & 0 & 0 & 1 \end{bmatrix}$$

$$R_y = \begin{bmatrix} \cos(yaw) & 0 & \sin(yaw) & 0 \\ 0 & 1 & 0 & 0 \\ -\sin(yaw) & 0 & \cos(yaw) & 0 \\ 0 & 0 & 0 & 1 \end{bmatrix}$$

$$R_p = \begin{bmatrix} 1 & 0 & 0 & 0 \\ 0 & \cos(pitch) & -\sin(pitch) & 0 \\ 0 & \sin(pitch) & \cos(pitch) & 0 \\ 0 & 0 & 0 & 1 \end{bmatrix}$$

$$\ldots \text{ Equation 1}$$

In Equation 1, roll, yaw, and pitch denote rotational angle values of the mobile device 100 rotated with respect to the x-axis, the y-axis, and the z-axis, respectively.

FIGS. 10A, 10B, and 10C illustrate a mobile device that is rotated with respect to the x-axis, the y-axis, and the z-axis, respectively according to an embodiment of the present disclosure.

Referring to FIG. 10A, the mobile device 100 that is rotated with respect to the x-axis is illustrated. An angle value of the mobile device 100 rotated with respect to the x-axis corresponds to roll expressed in Equation 1.

Referring to FIG. 10B, the mobile device 100 that is rotated with respect to the y-axis is illustrated. An angle value of the mobile device 100 rotated with respect to the y-axis corresponds to yaw expressed in Equation 1.

Referring to FIG. 10C, the mobile device 100 that is rotated with respect to the z-axis is illustrated. An angle value of the mobile device 100 rotated with respect to the z-axis is referred to as pitch.

Meanwhile, the mobile device 100 may obtain a conversion matrix M used in generating a projection image with respect to the object 5 based on the inclination value of the mobile device 100 obtained from Equation 1 and based on Equations 2 and 3 below.

$$T = \begin{bmatrix} 1 & 0 & 0 & 0 \\ 0 & 1 & 0 & 0 \\ 0 & 0 & 1 & Dist \\ 0 & 0 & 0 & 1 \end{bmatrix}$$

... Equation 2

$$O = R_y * R_p * R_r$$

$$M = O^{-1} * T$$

... Equation 3

In Equation 2, Dist denotes a distance between the mobile device 100 and the projection image 20, O denotes a matrix including information about an inclination value of the mobile device 100, and M denotes a conversion matrix including information about conversion values needed in generating the projection image 20.

Meanwhile, when the conversion values needed in the projection image 20 are determined, calculation for disposing the pointer 25 on the projection image 20 may be performed based on the conversion values. A position of the pointer may be determined based on Equation 4 below.

$$0 \ll \varepsilon < Dist$$

$$T_c = \begin{bmatrix} 1 & 0 & 0 & X \\ 0 & 1 & 0 & Y \\ 0 & 0 & 1 & Dist - \varepsilon \\ 0 & 0 & 0 & 1 \end{bmatrix}$$

$$M_c = O * T_c$$

$$PP_c = M_c * P$$

... Equation 4

In Equation 4, X and Y may be respectively a horizontal distance and a vertical distance between the mobile device 100 and the pointer 25 that is previously set in the projection image 20. In addition, in Equation 4, Tc denotes a conversion matrix of the pointer 25, and Mc denotes a model matrix used to convert a projection image to virtual world coordinates. A model matrix may be obtained by multiplying a conversion matrix by an inclination value of the mobile device 100.

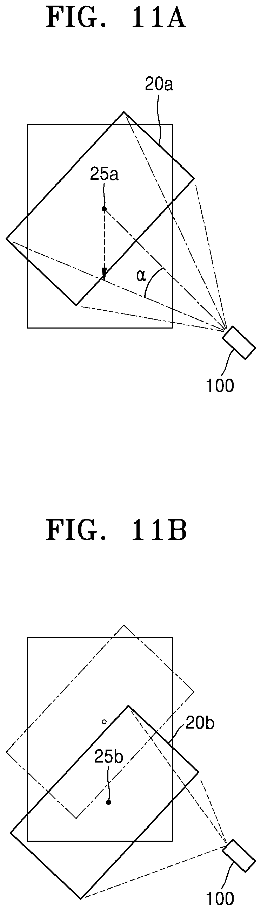

Meanwhile, the mobile device 100 may obtain a final matrix conversion value PPc used to dispose the pointer 25 on the projection image 20 by multiplying the model matrix by a projection matrix P. A formula regarding the projection matrix P will be described below with reference to FIG. 11.

Meanwhile, Equations 5 and 6 below are used to determine a position of the pointer 25 that is changed when the projection image 20 is redetermined according to movement of the mobile device 100.

$$c' = M^{-1} * \begin{bmatrix} 0 \\ 0 \\ 0 \\ 1 \end{bmatrix}$$

$$T_{cs} = \begin{bmatrix} 1 & 0 & 0 & X \\ 0 & 1 & 0 & Y \\ 0 & 0 & 1 & Dist - \varepsilon \\ 0 & 0 & 0 & 1 \end{bmatrix}$$

$$pw = T_{cs} * \begin{bmatrix} 0 \\ 0 \\ 0 \\ 1 \end{bmatrix}$$

$$\dots \text{Equation 5}$$

$$p' = M^{-1} * pw$$

$$v = p' - c'$$

$$t = -\frac{[0 \quad 0 \quad 1 \quad 0] * p'}{[0 \quad 0 \quad 1 \quad 0] * v}$$

$$p'' = p' + (v * t)$$

$$p_x = [1 \quad 0 \quad 0 \quad 0] * p''$$

$$p_y = [0 \quad 1 \quad 0 \quad 0] * p''$$

$$\dots \text{Equation 6}$$

In Equation 5, c' denotes camera coordinates in a model coordinate system. Tcs denotes a conversion matrix including information about a distance from the mobile device 100 to a preset position of the pointer 25 at a changed position, and pw denotes coordinates of the pointer 25 on a non-rotated plane in a global coordinate system.

The mobile device 100 may obtain, based on Equation 5, position information of the pointer 25 in the global coordinate system changed from the projection image 20 that is determined before the mobile device 100 has moved.

Meanwhile, the mobile device 100 may obtain, based on Equation 6, position information of the pointer 25 in the global coordinate system changed from the projection image 20 that is determined before the mobile device 100 has moved. In Equation 6, p' denotes coordinates of the pointer 25 on a non-rotated plane in a model coordinate system, v denotes a distance between a camera of the mobile device 100 and the pointer 25 on a projection image, and P" denotes a position of the pointer 25 on the changed projection image.

FIGS. 11A and 11B are diagrams illustrating a change in a position of a pointer as a projection image is changed when a mobile device is moved according to an embodiment of the present disclosure.

Referring to FIG. 11A, a projection image 20a generated before movement of the mobile device 100 is illustrated. Here, a position of a pointer 25a may be disposed at a center of the projection image 20a to correspond to a preset reference point.

Referring to FIG. 11B, a changed projection image 20b generated after movement of the mobile device 100 is illustrated. The position of a pointer 25b may be disposed at a center of the changed projection image 20b to correspond to a preset reference point. The preset reference point may include information about relative position values of the pointer 25b so as to dispose the pointer 25b at a position fixed with respect to the changed projection image 20b every time the projection image 20a is changed.

Meanwhile, also in the changed projection image 20b, the pointer 25b has to be located at the center of the projection image 20b as is preset, and thus, a position of the pointer 25b is changed according to the changed projection image 20b.

FIGS. 12A, 12B, 13A, and 13B are diagrams illustrating a method of correcting distortion of a projection image by using a mobile device according to an embodiment of the present disclosure.

Referring to FIGS. 12A, 12B, 13A, and 13B, the mobile device 100 may correct distortion of a projection image 20 that is generated when an inclination value or a position value of the mobile device 100, at which an image is projected from the mobile device 100 is changed. For example, if an inclination or a position of the mobile device 100 is changed, a projection image may not be vertically projected from the mobile device 100 on the object 5. In this case, the image projected on the object 5 may be spread, thus causing distortion.

The mobile device 100, according to an embodiment of the present disclosure, may measure an amount of movement thereof so as to predict an image area of an image that is projected from a changed position of the mobile device 100 without distortion.

FIG. 12A illustrates a projection image 20a before the mobile device 100 performs correction. As the mobile device 100 is moved to rotate with respect to an x-axis, an inclination of the mobile device 100 is changed, and the projection image 20a projected onto the object 5 may be spread.

The mobile device 100 may predict a projection image that is to be formed without distortion, at a certain position based on information about an amount of movement of the mobile device 100, for example, based on a position variation or an angle variation of the mobile device 100. For example, when it is assumed that the mobile device 100 is located in a direction perpendicular to a projection point at which a changed projection image is to be located, the mobile device 100 may predict a projection image to be generated and may project the predicted projection image onto an object.

FIG. 12B illustrates a projection image 20b with which distortion due to movement of the mobile device 100 is corrected.

Referring to FIG. 12B, the distorted projection image 20a is corrected like a projection image generated by projection by using the mobile device 100 at a position perpendicular to a projection point.

In addition, when the projection image 20a illustrated in FIG. 13A and generated by using the mobile device 100 is distorted, as described with reference to FIGS. 12A and 12B, a projection image generated without distortion may be predicted at a corresponding position based on information about an amount of movement of the mobile device 100, for example, a position variation or an angle variation thereof. For example, when it is assumed that the mobile device 100 is located in a direction perpendicular to a projection point at which a changed projection image is to be located, the mobile device 100 may predict a projection image to be generated and may project the predicted projection image onto an object.

Meanwhile, correction of a projection image may be performed using Equations 7 to 9 below. Equations 7 and 8 are conversion formulas used in projecting an image area displayed on a screen of the mobile device 100, and Equation 9 is a conversion formula used in correcting distortion of a projection image.

$$f > Dist + 1 * \sin\left(\frac{HAOV}{2}\right) \quad \Lambda \quad f > Dist + 1 * \sin\left(\frac{VAOV}{2}\right)$$

$$0 \le n < \cos\left(\frac{HAOV}{2}\right) Dist \quad \Lambda \quad 0 \le n < \cos\left(\frac{VAOV}{2}\right) Dist$$

$$0 < Dist < f$$

$$t = Dist * tg(HAOV/2)$$

$$b = -Dist * tg(HAOV/2)$$

$$r = Dist * tg(VAOV/2)$$

$$l = -Dist * tg(VAOV/2)$$

$$\dots \text{Equation 7}$$

$$A = \frac{r + l}{r - l}$$

$$B = \frac{t + b}{t - b}$$

$$C = -\frac{f + n}{f - n}$$

$$D = -\frac{2fn}{f - n}$$

$$E = \frac{2n}{t - b}$$

$$F = \frac{2n}{r - l}$$

$$P = \begin{bmatrix} F & 0 & A & 0 \\ 0 & E & B & 0 \\ 0 & 0 & C & D \\ 0 & 0 & -1 & 0 \end{bmatrix}$$

$$PP = M * P$$

… Equation 8

$$LeftUpperCorner[x, y, z, v] = PP * \begin{bmatrix} -1 \\ 1 \\ 0 \\ 1 \end{bmatrix}$$

$$RightUpperCorner[x, y, z, v] = PP * \begin{bmatrix} 1 \\ 1 \\ 0 \\ 1 \end{bmatrix}$$

$$LeftBottomCorner[x, y, z, v] = PP * \begin{bmatrix} -1 \\ -1 \\ 0 \\ 1 \end{bmatrix}$$

$$RightBottomCorner[x, y, z, v] = PP * \begin{bmatrix} 1 \\ -1 \\ 0 \\ 1 \end{bmatrix}$$

… Equation 9

In Equations 7 and 8, f denotes a maximum viewpoint distance, n denotes a minimum viewpoint distance, Dist denotes a distance between the mobile device 100 and a projection image projected by using the mobile device 100, and t, b, r, and 1 denote distances from a center of an image to an upper edge, a lower edge, a left edge, and a right edge, respectively. In Equation 7, VAOV and HAOV denote a vertical angle of view and a horizontal angle of view, respectively.

A conversion formula of the projection image 20a projected on the object 5 is determined based on a model matrix M derived from Equation 3 described above and an inclination value P including rotation information of the mobile device 100.

Meanwhile, the projected projection image 20a may be distorted, and thus, the mobile device 100 has to be able to correct the distortion. Distortion may be corrected by predicting at which position on the object 5 the projection image 20 is to be projected, based on an amount of movement of the mobile device 100, and installing a program whereby distortion of the projection image 20a due to movement of the mobile device 100 at vertex coordinates of the projection image 20a may be corrected.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

The present disclosure may be described in terms of functional block components and various processing operations. Such functional blocks may be realized by any number of hardware and/or software components configured to perform the specified functions. For example, the present disclosure may employ various integrated circuit (IC) components, e.g., memory elements, processing elements, logic elements, look-up tables, and the like, which may carry out a variety of functions under the control of one or more microprocessors or other control devices. Similarly, where the elements are implemented using software programming or software elements, the present disclosure may be implemented with any programming or scripting language, such as C, C++, Java, assembler language, and the like, with the various algorithms being implemented with any combination of data structures, objects, processes, routines or other programming elements. Functional aspects may be implemented in algorithms that are performed on one or more processors. Furthermore, the present disclosure could employ any number of techniques according to the related art for electronics configuration, signal processing and/or control, data processing and the like. The words "mechanism," "element," "means," and "configuration" are used broadly and are not limited to mechanical or physical embodiments, but can include software routines in conjunction with processors, and the like.

The particular implementations shown and described herein are illustrative examples of the present disclosure and are not intended to otherwise limit the scope of the present disclosure in any way. For the sake of brevity, electronics of the related art, control systems, software development and other functional aspects of the systems (and components of the individual operating components of the systems) may not be described in detail. Furthermore, the connecting lines, or connectors shown in the various figures presented are intended to represent functional relationships and/or physical or logical couplings between the various elements. It should be noted that many alternative or additional functional relationships, physical connections or logical connections may be present in a practical device. Moreover, no item or component is essential to the practice of the present disclosure unless the element is specifically described as "essential" or "critical".

It should be understood that the various embodiments of the present disclosure described herein should be considered in a descriptive detect only and not for purposes of limitation. Descriptions of features or aspects within each embodiment should typically be considered as available for other similar features or aspects in other embodiments of the present disclosure.

While the present disclosure has been shown and described with reference to various embodiments thereof, it will be understood by those skilled in the art that various changes in form and details may be made therein without departing from the scope of the present disclosure as defined by the appended claims.

**Claims**

1. A method of projecting an image by using a mobile device (100), the method comprising:

determining (810), as a projection image (20a), an image area displayed on the mobile device, from among an entire image (10) expressing content being replayed or accessed on the mobile device (100); projecting (820) the projection image (20a) and a pointer (25) disposed on the projection image (20a); in response to detecting (830) a change in an inclination or a position of the mobile device (100):

determining (840) whether an amount of change in an inclination or a position, for a preset period of time, of the mobile device (100) exceeds a pre-determined critical value; changing (850) the projection image (20a) within the entire image (10) according to the amount of change if the amount of change in the inclination or the position for the preset period of the time exceeds the pre-determined critical value; redetermining (840) a new projection image based on the amount of change in the inclination or the position, the new projection image being moved by an amount of an area corresponding to the amount of change in the inclination or position ; and projecting (860) the pointer (25) disposed on the changed projection image (20b) disposed on the redetermined new projection image,

wherein redetermining the new projection image comprises:

predicting a distortion of the changed projection image based on the amount of change in the inclination or the position of the mobile device; and correcting the predicted distortion of the changed projection image.

2. The method of claim 1, wherein the changing of the projection image comprises changing a position of the pointer on the projection image based on a user input.

3. The method of claim 1, further comprising:

initializing position information of the mobile device based on a user input; and redetermining the projection image based on the initialized position information.

4. The method of claim 1, further comprising initializing, if the redetermined projection image is not projected within the preset period of time, the redetermined projection image.

5. A mobile device (100) comprising:

a display unit (130) configured to display content being replayed or accessed on the mobile device; a movement detector (140) configured to detect movement of the mobile device (100); an image processor (110) configured to:

determine, as a projection image (20a), an image area displayed on the mobile device (100), from among an entire image (10) expressing content being replayed or accessed on the mobile device (100), in response to detecting a change in an inclination or a position of the mobile device (100), determine whether an amount of change in the inclination or the position, for a preset period of time, of the mobile device (100) exceeds a pre-determined critical value, change the projection image (20a) within the entire image (10) according to the amount of change if the amount of change in the inclination or the position for the preset period of the time exceeds the pre-determined critical value, redetermine a new projection image based on the amount of change in the inclination or the position, the new projection image being moved by an amount of an area corresponding to the amount of change in the inclination or position ; and

a projector (120) configured to project the projection image (20a) and a pointer (25) disposed on the projection image (20a) and to project the pointer (25) disposed on the changed projection image (20b) or disposed on the redetermined new projection image,
wherein redetermining the new projection image comprises:

predicting a distortion of the changed projection image based on the amount of change in the inclination or the position of the mobile device; and
correcting the predicted distortion of the changed projection image.

6. The mobile device of claim 5, further comprising a user input unit (150) through which a user input is received, wherein the image processor (110) is further configured to change a position of the pointer (25) on the projection image based on a touch input that is obtained.

7. The mobile device of claim 5, wherein the image processor (110) is further configured to:

initialize position information of the mobile device (100) based on a user input, and
redetermine the new projection image based on the initialized position information of the mobile device (100).

8. The mobile device of claim 5, wherein the image processor (110) is further configured to initialize the redetermined projection image, if the redetermined projection image is not projected within the preset period of time.

9. At least one non-transitory computer readable recording medium for storing a computer program configured to be readable by at least one processor for instructing the at least one processor to cause the mobile device of claim 5 to execute the method of claim 1.


**Patentansprüche**

1. Verfahren zur Projektion eines Bilds durch Verwendung einer mobilen Vorrichtung (100), wobei das Verfahren umfasst:

ein Bestimmen (810), als ein Projektionsbild (20a), einer Bildfläche, die auf der mobilen Vorrichtung angezeigt wird, aus einem Gesamtbild (10), das Inhalte ausdrückt, die auf der mobilen Vorrichtung (100) abgespielt oder aufgerufen werden;
ein Projizieren (820) des Projektionsbilds (20a) und eines Zeigers (25), der auf dem Projektionsbild (20a) angeordnet ist;
in Reaktion auf ein Detektieren (830) einer Änderung in einer Neigung oder einer Position der mobilen Vorrichtung (100):

ein Bestimmen (840), ob eine Menge an Änderung in einer Neigung oder einer Position der mobilen Vorrichtung (100) für einen voreingestellten Zeitraum einen vorgegebenen kritischen Wert übersteigt;
ein Ändern (850) des Projektionsbilds (20a) im Gesamtbild (10) entsprechend der Menge an Änderung, wenn die Menge an Änderung in der Neigung oder der Position für den voreingestellten Zeitraum den vorgegebenen kritischen Wert übersteigt;
ein erneutes Bestimmen (840) eines neuen Projektionsbilds basierend auf der Menge an Änderung in der Neigung oder der Position, wobei das neue Projektionsbild um eine Menge einer Fläche, die der Menge an Änderung in der Neigung oder Position entspricht, bewegt wird; und
ein Projizieren (860) des auf dem geänderten Projektionsbild (20b) angeordneten oder auf dem neubestimmten neuen Projektionsbild angeordneten Zeigers (25),

wobei das Neubestimmen des neuen Projektionsbilds umfasst:

ein Vorhersagen einer Verzerrung des geänderten Projektionsbilds basierend auf der Menge an Änderung in der Neigung oder der Position der mobilen Vorrichtung; und
ein Korrigieren der vorhergesagten Verzerrung des geänderten Projektionsbilds.

2. Verfahren nach Anspruch 1, wobei das Ändern des Projektionsbilds ein Ändern einer Position des Zeigers auf dem Projektionsbild basierend auf einer Nutzereingabe umfasst.

**3.** Verfahren nach Anspruch 1, ferner umfassend:

ein Initialisieren von Positionsinformationen der mobilen Vorrichtung basierend auf einer Nutzereingabe; und ein Neubestimmen des Projektionsbilds basierend auf den initialisierten Positionsinformationen.

**4.** Verfahren nach Anspruch 1, ferner umfassend ein Initialisieren, wenn das neubestimmte Projektionsbild nicht innerhalb des voreingestellten Zeitraums projiziert wird, des neubestimmten Projektionsbilds.

**5.** Mobile Vorrichtung (100), umfassend:

eine Anzeigeeinheit (130), die konfiguriert ist, um Inhalte anzuzeigen, die auf der mobilen Vorrichtung wiedergegeben oder aufgerufen werden; einen Bewegungsdetektor (140), der konfiguriert ist, um Bewegung der mobilen Vorrichtung (100) zu detektieren; einen Bildprozessor (110), der konfiguriert ist, um:

eine auf der mobilen Vorrichtung (100) angezeigte Bildfläche aus einem Gesamtbild (10), das Inhalte ausdrückt, die auf der mobilen Vorrichtung (100) wiedergegeben oder aufgerufen werden, als ein Projektionsbild (20a) zu bestimmen, in Reaktion auf ein Detektieren einer Änderung in einer Neigung oder einer Position der mobilen Vorrichtung (100) zu bestimmen, ob eine Menge an Änderung in der Neigung oder der Position der Mobilvorrichtung (100) für einen voreingestellten Zeitraum einen vorgegebenen kritischen Wert übersteigt, das Projektionsbild (20a) im Gesamtbild (10) gemäß der Menge an Änderung zu ändern, wenn die Menge an Änderung in der Neigung oder der Position für den voreingestellten Zeitraum den vorgegebenen kritischen Wert übersteigt, basierend auf der Menge an Änderung in der Neigung oder der Position ein neues Projektionsbild neuzubestimmen, wobei das neue Projektionsbild um eine Menge einer Fläche bewegt wird, die der Menge an Änderung in der Neigung oder Position entspricht; und einen Projektor (120), der konfiguriert ist, um das Projektionsbild (20a) und einen Zeiger (25), der auf dem Projektionsbild (20a) angeordnet ist, zu projizieren, und den auf dem geänderten Projektionsbild (20b) angeordneten oder auf dem neubestimmten neuen Projektionsbild angeordneten Zeiger (25) zu projizieren, wobei das Neubestimmen des neuen Projektionsbilds umfasst:

ein Vorhersagen einer Verzerrung des geänderten Projektionsbilds basierend auf der Menge an Änderung in der Neigung oder der Position der mobilen Vorrichtung; und ein Korrigieren der vorhergesagten Verzerrung des geänderten Projektionsbilds.

**6.** Mobile Vorrichtung nach Anspruch 5, ferner umfassend eine Nutzereingabeeinheit (150), durch die eine Nutzereingabe empfangen wird, wobei der Bildprozessor (110) ferner konfiguriert ist, um eine Position des Zeigers (25) auf dem Projektionsbild basierend auf einer erhaltenen Berührungseingabe zu ändern.

**7.** Mobile Vorrichtung nach Anspruch 5, wobei der Bildprozessor (110) ferner konfiguriert ist, um: Positionsinformationen der mobilen Vorrichtung (100) basierend auf einer Nutzereingabe zu initialisieren und das neue Projektionsbild basierend auf den initialisierten Positionsinformationen der mobilen Vorrichtung (100) neuzubestimmen.

**8.** Mobile Vorrichtung nach Anspruch 5, wobei der Bildprozessor (110) ferner konfiguriert ist, um das neu bestimmte Projektionsbild zu initialisieren, wenn das neu bestimmte Projektionsbild nicht innerhalb des voreingestellten Zeitraums projiziert wird.

**9.** Mindestens ein nicht-transientes computerlesbares Aufzeichnungsmedium zum Speichern eines Computerprogramms, das konfiguriert ist, um von mindestens einem Prozessor lesbar zu sein, um den mindestens einen Prozessor anzuweisen, die mobile Vorrichtung nach Anspruch 5 zu veranlassen, das Verfahren nach Anspruch 1 auszuführen.

**Revendications**

**1.** Méthode de projection d'une image en utilisant un appareil mobile (100), la méthode comprenant :

la détermination (810), en tant qu'image de projection (20a), d'une surface d'image affichée sur l'appareil mobile, au sein d'une image entière (10) exprimant un contenu lu ou accessible sur l'appareil mobile (100),

la projection (820) de l'image de projection (20a) et un pointeur (25) disposé sur l'image de projection (20a) ;

en réponse à la détection (830) une variation d'une inclinaison ou d'une position de l'appareil mobile (100) ;

la détermination (840) si une ampleur de la variation d'une inclinaison ou d'une position, pendant une période prédéterminée, de l'appareil mobile (100), dépasse une valeur critique prédéterminée ;

la variation (850) de l'image de projection (20a) au sein de l'image entière (10) en fonction de l'ampleur de la variation si l'ampleur de la variation de l'inclinaison ou de la position pendant la période prédéterminée dépasse la valeur critique prédéterminée ;

la redétermination (840) d'une nouvelle image de projection basée sur l'ampleur de la variation de l'inclinaison ou de la position, la nouvelle image de projection étant déplacée d'une quantité d'une surface correspondant à l'ampleur de la variation de l'inclinaison ou de la position ; et

la projection (860) du pointeur (25) disposé sur l'image de projection modifiée (20b), ou disposée sur la nouvelle image de projection redéterminée, la redétermination de la nouvelle image de projection comprenant : la prédiction d'une distorsion de l'image de projection modifiée en fonction de l'ampleur de la variation de l'inclinaison ou de la position de l'appareil mobile ; et

la correction de la distorsion prévue de l'image de projection modifiée.

2. Méthode selon la revendication 1, la variation de l'image de projection comprenant la variation d'une position du pointeur sur l'image de projection en fonction d'une entrée par l'utilisateur.

3. Méthode selon la revendication 1, comprenant en outre :

l'initialisation des informations de position de l'appareil mobile en fonction d'une entrée par l'utilisateur ; et

la redétermination de l'image de projection en fonction des informations initialisées sur la position.

4. Méthode selon la revendication 1, comprenant en outre l'initialisation, si l'image de projection redéterminée n'est pas projetée dans la période prédéterminée, de l'image de projection redéterminée.

5. Appareil mobile (100) comprenant :

un dispositif d'affichage (130) configuré pour afficher un contenu lu ou accessible sur l'appareil mobile ;

un détecteur de mouvement (140) configuré pour détecter un mouvement de l'appareil mobile (100) ;

un processeur d'image (110) configuré pour :

déterminer, en tant qu'image de projection (20a), une zone d'image affichée sur l'appareil mobile (100), parmi une image entière (10) exprimant un contenu lu ou accessible sur l'appareil mobile (100), en réponse à la détection d'une variation d'une inclinaison ou d'une position de l'appareil mobile (100), déterminer si une ampleur de la variation de l'inclinaison ou de la position, pendant une période prédéterminée, de l'appareil mobile (100) dépasse une valeur critique prédéterminée, varier l'image de projection (20a) au sein de l'image entière (10) en fonction de l'ampleur de la variation, si l'ampleur de la variation de l'inclinaison ou de la position pendant la période prédéterminée dépasse la valeur critique prédéterminée, redéterminer une nouvelle image de projection sur la base de l'ampleur de la variation de l'inclinaison ou de la position, la nouvelle image de projection étant déplacée d'une quantité d'une surface correspondant à l'ampleur de la variation de l'inclinaison ou de la position ; et

un projecteur (120) configuré pour projeter l'image de projection (20a) et un pointeur (25) disposés sur l'image de projection (20a), et pour projeter le pointeur (25) disposé sur l'image de projection (20b) modifiée, ou disposée sur la nouvelle image de projection redéterminée, la redétermination de la nouvelle image de projection comprenant :

la prédiction d'une distorsion de l'image de projection variée, sur la base de l'ampleur de la variation de l'inclinaison ou de la position de l'appareil mobile ; et

la correction de la distorsion prévue de l'image de projection variée.

6. Appareil mobile selon la revendication 5, comprenant en outre une unité d'entrée utilisateur (150) par laquelle une entrée de l'utilisateur est reçue, le processeur d'image (110) étant configuré en outre pour varier une position du pointeur (25) sur l'image de projection en fonction d'une entrée tactile obtenue.

7.  Appareil mobile selon la revendication 5, le processeur d'image (110) étant configuré en outre pour :
    initialiser des informations de position de l'appareil mobile (100), en fonction d'une entrée utilisateur, et redéterminer la nouvelle image de projection en fonction des informations de position initialisées de l'appareil mobile (100).

8.  Appareil mobile selon la revendication 5, le processeur d'image (110) étant configuré en outre pour initialiser les informations de position redéterminées, si l'image de projection redéterminée n'est pas projetée dans la période prédéterminée.

9.  Au moins un support d'enregistrement non transitoire lisible par ordinateur, pour le stockage d'un logiciel configuré pour pouvoir être lu par au moins un processeur pour commander à l'au moins un processeur de déterminer l'exécution, par l'appareil mobile selon la revendication 5, de la méthode selon la revendication 1.

# FIG. 1A

# FIG. 1B

# FIG. 2

START

DETERMINE, AS PROJECTION IMAGE,
IMAGE AREA DISPLAYED ON MOBILE DEVICE,
FROM AMONG AN ENTIRE IMAGE EXPRESSING CONTENT
BEING REPLAYED OR EXECUTED ON MOBILE DEVICE — 210

PROJECT PROJECTION IMAGE AND
POINTER DISPOSED ON PROJECTION IMAGE — 220

CHANGE PROJECTION IMAGE IN ENTIRE IMAGE
BY DETECTING MOVEMENT OF MOBILE DEVICE — 230

END

# FIG. 3

# FIG. 4

# FIG. 5

START

| DETERMINE, AS PROJECTION IMAGE, IMAGE AREA DISPLAYED ON MOBILE DEVICE, FROM AMONG AN ENTIRE IMAGE EXPRESSING CONTENT BEING REPLAYED OR EXECUTED ON MOBILE DEVICE | 510 |

| PROJECT PROJECTION IMAGE AND POINTER DISPOSED ON PROJECTION IMAGE | 520 |

| CHANGE POSITION OF POINTER ON PROJECTION IMAGE BASED ON USER INPUT | 530 |

END

# FIG. 6

# FIG. 7

# FIG. 8

START

```
DETERMINE, AS PROJECTION IMAGE,
IMAGE AREA DISPLAYED ON MOBILE DEVICE,
FROM AMONG AN ENTIRE IMAGE EXPRESSING CONTENT
BEING REPLAYED OR EXECUTED ON MOBILE DEVICE
```
— 810

```
PROJECT PROJECTION IMAGE AND
POINTER DISPOSED ON PROJECTION IMAGE
```
— 820

```
DETECT CHANGE IN INCLINATION
OR POSITION OF MOBILE DEVICE
```
— 830

```
REDETERMINE PROJECTION IMAGE BASED ON
VARIATION IN INCLINATION OR POSITION
```
— 840

```
CHANGE POSITION OF POINTER ON
PROJECTION IMAGE BASED ON USER INPUT
```
— 850

```
PROJECT REDETERMINED PROJECTION IMAGE AND
POINTER DISPOSED ON REDETERMINED PROJECTION IMAGE
```
— 860

END

# FIG. 9A

# FIG. 9B

# FIG. 10A

# FIG. 10B

# FIG. 10C

# FIG. 11A

# FIG. 11B

# FIG. 12A

# FIG. 12B

# FIG. 13A

# FIG. 13B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020140115474
- US 20120165077 A
- EP 2180676 A